# EUROPÄISCHE PATENTSCHRIFT

(11) **EP 1 198 537 B1**
(45) Veröffentlichungstag und Bekanntmachung des Hinweises auf die Patenterteilung: **15.09.2004**
(21) Anmeldenummer: 00941956.5
(22) Anmeldetag: 17.05.2000
(51) Int. Cl.: C09K 19/02, C09K 19/34

(54) **AKTIVMATRIX-DISPLAYS MIT HOHEM KONTRAST**
HIGH-CONTRAST ACTIVE MATRIX DISPLAYS
AFFICHAGES A MATRICE ACTIVE A CONTRASTE ELEVE

(30) Priorität: 18.05.1999 DE 19922723
(43) Veröffentlichungstag der Anmeldung: 24.04.2002
(73) Patentinhaber: CLARIANT INTERNATIONAL LTD., 4132 Muttenz (CH)
(72) Erfinder: Nonaka, Toshiaki, Kakegawa-shi Shizuoka Pref. 436-0027 (JP); Dübal, Hans-Rolf, 65343 Eltville (DE); Hornung, Barbara, 63594 Hasselroth (DE); Li, Ji, Kakegawa-Shi Shizuoka Pref. (JP); Ogawa, Ayako, Kakegawa City, Shizuoka Pref. (JP); Schmidt, Wolfgang, 51143 Köln (DE); Wingen, Rainer, 65795 Hattersheim (DE)
(74) Vertreter: Isenbruck, Günter, Dr.
(86) Internationale Anmeldenummer: PCT/EP2000/004454
(87) Internationale Veröffentlichungsnummer: WO 2000/069987

(56) Entgegenhaltungen:
- WO-A-99/64538
- DE-A- 19 825 487
- DE-A- 19 825 488
- DE-A- 19 857 352

## Beschreibung

Der Ersatz der Kathodenstrahlröhre (Bildröhre) durch einen flachen Bildschirm erfordert eine Displaytechnologie, die gleichzeitig eine hohe Auflösung, d.h. mehr als 1000 Zeilen, eine hohe Helligkeit (>200 Cd/m²), einen hohen Kontrast (>100:1), eine hohe Bildfrequenz (>60 Hz), eine ausreichende Farbdarstellung (>16 Mio), ein großes Bildformat (>40 cm), eine geringe Leistungsaufnahme und einen weiten Betrachtungswinkel ermöglicht, verbunden mit niedrigen Herstellkosten. Zur Zeit existiert keine Technologie, die alle diese Merkmale gleichzeitig in vollem Umfang erfüllt.

Viele Hersteller haben auf der Basis nematischer Flüssigkristalle Bildschirme entwickelt, die seit einigen Jahren im Bereich von Notebook PC, Personal Digital Assistants, Desktop Monitore usw. im Einsatz sind. Dabei werden die Technologien STN (Supertwisted Nematics), AM-TN (Active Matrix - Twisted Nematics), AM-IPS (Active Matrix - In Plane Switching), AM-MVA (Active Matrix - Multidomain Vertically Aligned) verwendet, die in der einschlägigen Literatur ausführlich beschrieben werden (siehe z.B. T. Tsukuda, TFT/LCD: Liquid Crystal Displays Addressed by Thin-Film Transistors, Gordon and Breach 1996, ISBN 2-919875-01-9 und darin zitierte Literatur; SID Symposium 1997, ISSN-0097-966X und darin zitierte Literatur). Darüber hinaus wird auf die Technologien PDP (Plasma Display Panel), PALC (Plasma Addressed Liquid Crystal), ELD (Electro Luminescent Display), FED (Field Emission Display) usw. hingewiesen, die ebenfalls im oben zitierten SID-Bericht erläutert sind.

Clark und Lagerwall (US-Patent 4,367,924) konnten zeigen, daß der Einsatz ferroelektrischer Flüssigkristalle (FLC) in sehr dünnen Zellen zu optoelektrischen Schalt- oder Anzeigeelementen führt, die im Vergleich zu den herkömmlichen TN ("twisted nematic")-Zellen um bis zu einem Faktor 1000 kürzere Schaltzeiten haben (siehe z. B. EP-A 0 032 362). Aufgrund dieser und anderer günstiger Eigenschaften, z. B. der bistabilen Schaltmöglichkeit und des nahezu blickwinkelunabhängigen Kontrasts, sind FLCs grundsätzlich für Anwendungsgebiete wie Computerdisplays und Fernsehgeräte geeignet, wie ein seit Mai 1995 in Japan von Canon vermarkteter Monitor zeigt.

Für die Verwendung von FLCs in elektrooptischen oder vollständig optischen Bauelementen benötigt man entweder Verbindungen, die geneigte bzw. orthogonale smektische Phasen ausbilden und selbst optisch aktiv sind, oder man kann durch Dotierung von Verbindungen, die zwar solche smektischen Phasen ausbilden, selbst aber nicht optisch aktiv sind, mit optisch aktiven Verbindungen ferroelektrische smektische Phasen induzieren. Die gewünschte Phase soll dabei über einen möglichst großen Temperaturbereich stabil sein, um einen breiten Arbeitsbereich des Displays sicherzustellen.

Die einzelnen Bildelemente (Pixel) eines LC-Displays sind üblicherweise in einer x, y Matrix angeordnet, die durch die Anordnung je einer Serie von Elektroden (Leiterbahnen) entlang der Reihen und der Spalten an der Unter- bzw. Oberseiteseite des Displays gebildet wird. Die Kreuzungspunkte der horizontalen (Reihen-) und vertikalen (Spalten-) Elektroden bilden adressierbare Pixel.

Diese Anordnung der Bildpunkte bezeichnet man üblicherweise als eine passive Matrix. Zur Adressierung wurden verschiedene Multiplex-Schemata entwickelt, wie sie beispielsweise in Displays 1993, Vol. 14, Nr. 2, S. 86-93 und Kontakte 1993 (2), S. 3-14 beschrieben sind. Die passive Matrixadressierung hat den Vorteil einer einfacheren Herstellung des Displays und damit verbundenen geringen Herstellkosten, jedoch den Nachteil, daß die passive Adressierung immer nur zeilenweise erfolgen kann, was dazu führt, daß die Adressierungszeit des gesamten Bildschirms bei N Zeilen das N-fache der Zeilenadressierungszeit beträgt. Bei üblichen Zeilenadressierungszeiten von ca. 50 Mikrosekunden bedeutet das eine Bildschirmadressierungszeit von ca. 60 Millisekunden bei z.B. HDTV Norm (High Definition TV, 1152 Zeilen), d.h. eine maximale Bildfrequenz von ca. 16 Hz, die für bewegte Bilder zu gering ist. Zudem ist die Darstellung von Graustufen schwierig. Mizutani et.al. haben auf der FLC-Konferenz in Brest, Frankreich (20.-24 Juli 1997, siehe Abstract Book 6^{th} International Conference on Ferroelectric Liquid Crystals, Brest / France) ein passives FLC-Display mit digitalen Graustufen vorgestellt, bei dem jeder der RGB-Bildpunkte (RGB= red, green, blue) in Unterpunkte unterteilt wurde, wodurch vermittels partiellem Schalten die Darstellung von Grauwerten in digitaler Form ermöglicht wird. Bei N Grauwerten unter Verwendung dreier Grundfarben (rot, grün, blau) ergeben sich 3^{N} Farben. Der Nachteil dieser Methode ist eine starke Erhöhung der Anzahl benötigter Bildschirmtreiber und damit der Kosten (im Falle des in Brest gezeigten Bildschirm wurden dreimal soviele Treiber benötigt, wie bei einem normalen FLC Display ohne digitale Graustufen).

Bei der sogenannten Aktivmatrix-Technologie (AMLCD) wird üblicherweise ein nicht-strukturiertes Substrat mit einem Aktivmatrix-Substrat kombiniert. An jedem Pixel des Aktivmatrixsubstrates ist ein elektrisch nichtlineares Element, beispielsweise ein Dünnschichttransistor, integriert. Bei dem nichtlinearen Element kann es sich auch um Dioden, Metall-Insulator-Metall u.ä. Elemente handeln, die vorteilhaft mit Dünnschichtverfahren hergestellt werden und in der einschlägigen Literatur beschrieben sind (s. z.B. T. Tsukuda, TFT/LCD: Liquid Crystal Displays Addressed by Thin-Film Transistors, Gordon and Breach 1996, ISBN 2-919875-01-9 und darin zitierte Literatur).

Aktivmatrix-LCDs werden üblicherweise mit nematischen Flüssigkristallen im TN-(twisted nematics), ECB- (electrically controlled birefringence), VA-(vertically aligned) oder IPS- (in plane switching) Modus betrieben. In jedem Fall wird durch die aktive Matrix an jedem Bildpunkt ein elektrisches Feld individueller Stärke erzeugt, das eine Orientierungsänderung und damit eine Änderung der Doppelbrechung erzeugt, die wiederum im polarisierten Licht optisch sichtbar ist. Ein schwerwiegender Nachteil dieser Verfahren ist die mangelnde Videofähigkeit, d.h. die zu langen Schaltzeiten nematischer Flüssigkristalle.

Unter anderem aus diesem Grunde wurden Flüssigkristallanzeigen, die auf der Kombination aus ferroelektrischen Flüssigkristallmaterialien und aktiven MatrixElementen beruhen, z.B. in WO 97/12355 oder in Ferroelectrics 1996, 179, 141-152 oder bei W.J.A.M. Hartmann (IEEE Trans. Electron. Devices 1989, 36,(9; Pt. 1), 1895-9, sowie Dissertation Eindhoven, Niederlande 1990) vorgeschlagen.

Hartmann nutzte eine Kombination aus der sogenannten 'Quasi-bookshelf Geometrie' (QBG) von FLC und einer TFT (Thin-Film-Transistor) Aktivmatrix und erhielt gleichzeitig eine hohe Schaltgeschwindigkeit, Graustufen und hohe Transmission. Allerdings ist die QBG nicht über einen weiten Temperaturbereich stabil, da durch die Temperaturabhängigkeit der smektischen Schichtdicke die feldinduzierte Lagenstruktur aufbricht oder sich dreht. Darüber hinaus nutzt Hartmann ein FLC-Material mit einer Spontanpolarisation von mehr als 20 nC/cm², was bei Bildpunkten von realistischer Dimension von z.B. 0,01 mm² zu großen elektrischen Ladungen führt (bei Sättigung gilt Q = 2 A P, A= Bildpunktfläche, P= spontane Polarisation), die z.B. mit kostengünstig herstellbaren amorphem Silizium - TFT während der Öffnungszeit des TFT nicht auf den Bildpunkt gelangen können. Aus diesen Gründen wurde diese Technologie bisher nicht weiterverfolgt.

Während Hartmann die ladungskontrollierte Bistabilität zur Darstellung einer nahezu kontinuierlichen Grauskala ausnutzt, haben Nito et. al. eine monostabile FLC Geometrie vorgeschlagen (Journal of the SID, 1 / 2, 1993, Seiten 163-169), bei der das FLC Material mit Hilfe verhältnismäßig hoher Spannungen derart orientiert wird, daß nur eine stabile Lage entsteht, aus der dann bei Anlegen eines elektrischen Feldes über einen Dünnschichttransistor eine Reihe von Zwischenzuständen erzeugt wird, die bei angepaßter Zellgeometrie zwischen gekreuzten Polarisatoren einer Reihe von verschiedenen Helligkeitsgraden (Grauwerte) entsprechen.

Der Nachteil bei der Arbeit von Nito et.al. ist das Auftreten einer Streifentextur, die den Kontrast und die Helligkeit dieser Zelle begrenzt (siehe Abb. 8 des o.a. Zitates). Die nachteilige Streifentextur läßt sich durch eine Behandlung mit einem hohen elektrischen Feld (20-50 V) in der nematischen bzw. cholesterischen Phase (s. S. 168 des o.a. Zitates) zwar korrigieren; jedoch ist eine solche Feldbehandlung nicht für die Massenfertigung von Bildschirmen geeignet und führt in der Regel auch nicht zu temperaturstabilen Texturen. Darüber hinaus ergibt diese Methode lediglich ein Schalten in einem Winkelbereich von bis zu maximal dem einfachen Tiltwinkel, der bei dem von Nito et. al. verwendeten Material bei ca. 22° liegt (s.S. 165 Abb. 6) und damit nur eine Transmission von maximal 50 % der Transmission zweier paralleler Polarisatoren ergibt.

WO 99/64538 betrifft ein monostabiles ferroelektrisches Aktivmatrix-Display. Das Display enthält eine Flüssigkristallschicht in Form einer Monodomäne mit einer eindeutig definierten Richtung der Schichtennormalen der z der Sm*-Phase, wobei die Schichtennormalen z und die Vorzugsrichtung n der nematischen bzw. cholesterischen Phase (N*-Phase) einen Winkel von mehr als 5° ausbilden.

Aufgabe der Erfindung ist die Bereitstellung einer Aktivmatrix-Flüssigkristallanzeige, die eine chiral-smektische Flüssigkristallmischung enthält, wobei die Flüssigkristallmischung eine sehr hohe Maximaltransmission sowie über einen weiten Temperaturbereich einen sehr hohen Kontrast und eine konstante Schwellspannung ermöglicht.

Insbesondere soll eine ferroelektrische Aktiv-Matrix-Flüssigkristallanzeige (Display), die eine ferroelektrische Flüssigkristallmischung enthält, bereitgestellt werden, wobei die Flüssigkristallmischung eine monostabile Lage einnimmt, jedoch keinerlei Streifentextur bildet, temperaturstabil ist und eine sehr hohe Maximaltransmission sowie einen sehr hohen Kontrast sowie eine konstante Schwellspannung über einen weiten Temperaturbereich ermöglicht.

Die Aufgabe wird erfindungsgemäß gelöst durch ein Aktivmatrixdisplay mit einer asymmetrisch aufgebauten Zelle, die eine monostabile Flüssigkristalldomaine enthält, wobei die chiral-smektische Flüssigkristallmischung die Phasenfolge I-N*-SmC*, eine Spontanpolarisation im Bereich der Arbeitstemperatur von <40 nC/cm², sowie bei mindestens einer Temperatur in der nematischen Phase einen Pitch von >20 µm aufweist und die Abweichung der monostabilen Position von der Reiberichtung im Bereich der Arbeitstemperatur des Displays dem Betrag nach weniger als 10 Grad beträgt, und wobei die Flüssigkristallmischung mindestens je 1 Verbindung der Substanzklassen (A) und (B) und, bezogen auf die Flüssigkristallmischung, 0,05 bis 50 Gew.-% einer oder mehrerer Verbindungen der Substanzklasse (C) enthält

Verbindungen der Substanzklasse (A) entsprechend den Formeln 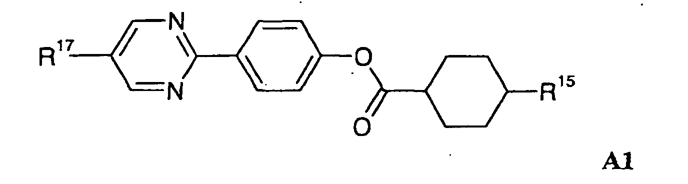 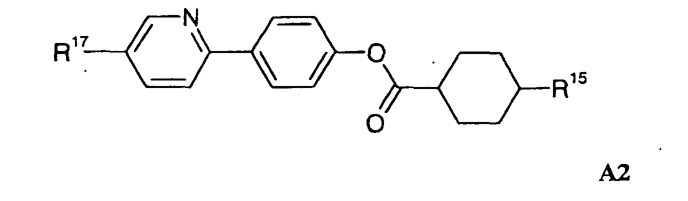 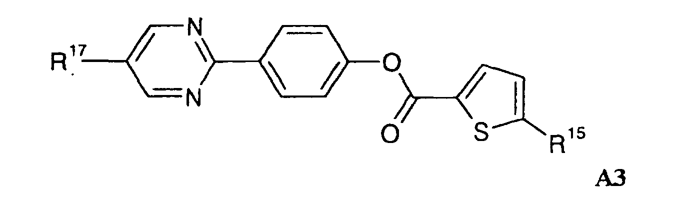 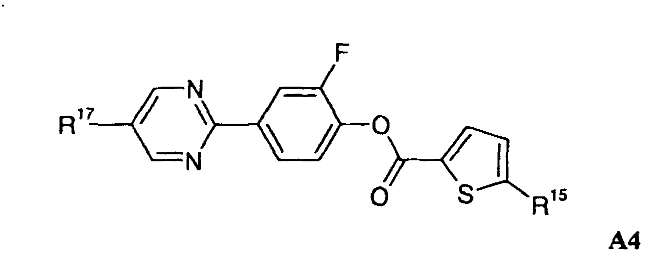 worin bedeuten:
- **R**^{**15**}: eine Alkyl- oder Alkyloxy-Gruppe von 2 bis 16 C-Atomen, worin eine oder zwei nicht benachbarte -CH₂-Gruppen durch -O- und/oder -CH=CH- ersetzt sein können und worin auch ein oder mehrere H-Atome durch F ersetzt sein können
- **R**^{**17**}: eine Alkyl- oder Alkyloxy-Gruppe von 2 bis 16 C-Atomen, worin auch die dem Kern nächste -CH₂-Gruppe durch -OC(=O)- oder -C(=O)O- ersetzt sein kann und worin auch eine weitere, nicht benachbarte und nicht terminale -CH₂-Gruppe durch -O- ersetzt sein kann,

Verbindungen der Substanzklasse (B) entsprechend den Formeln 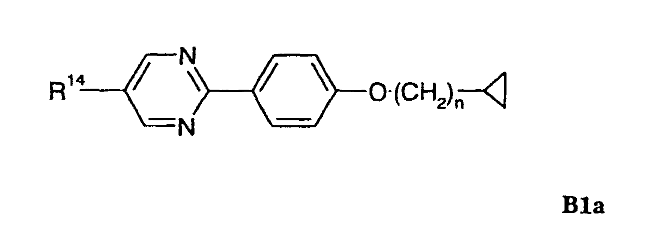 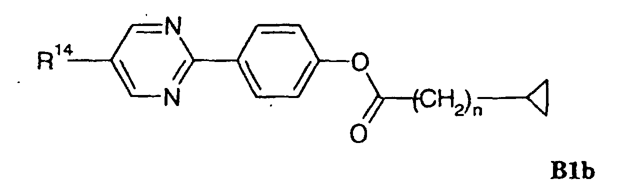 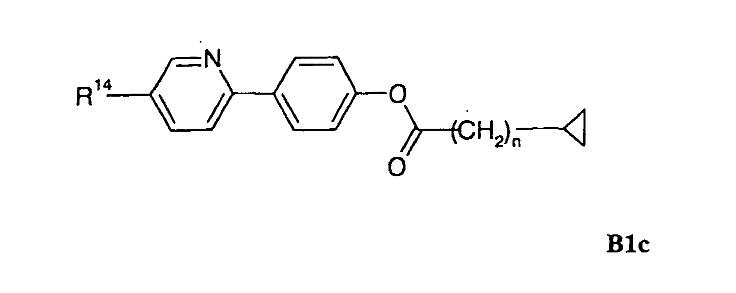 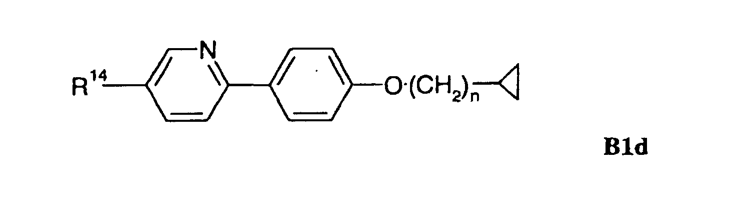 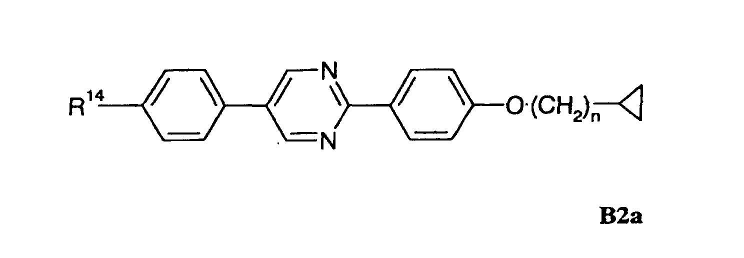 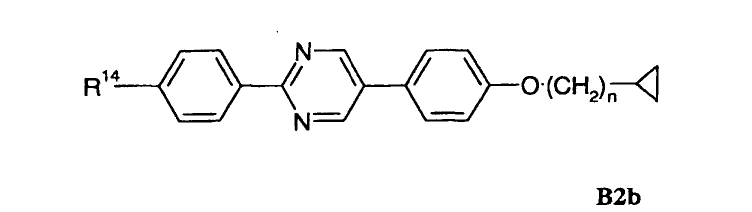 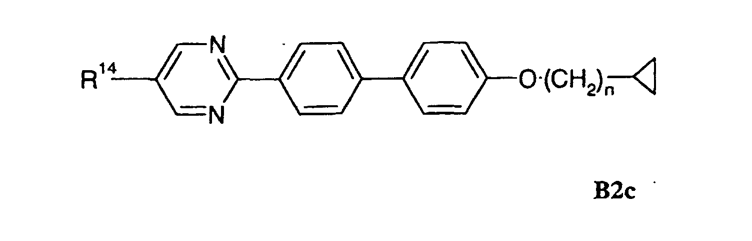 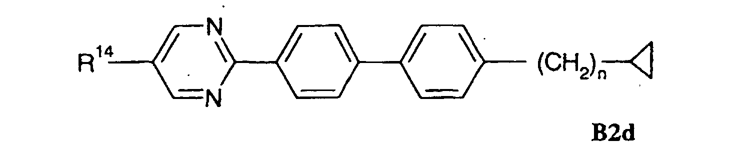 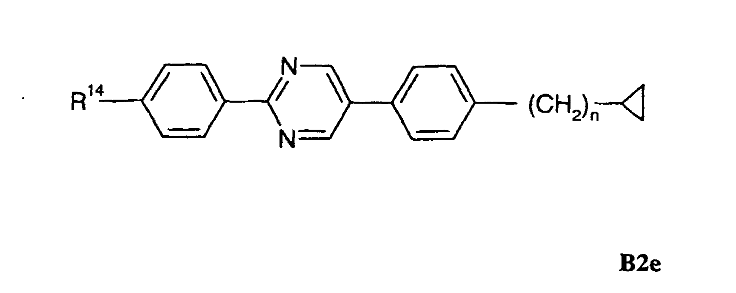 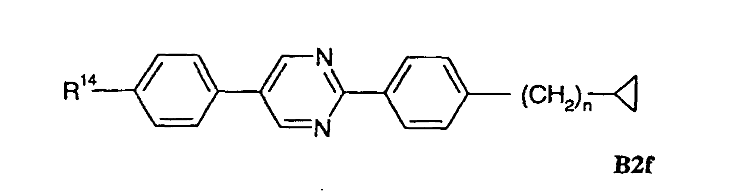 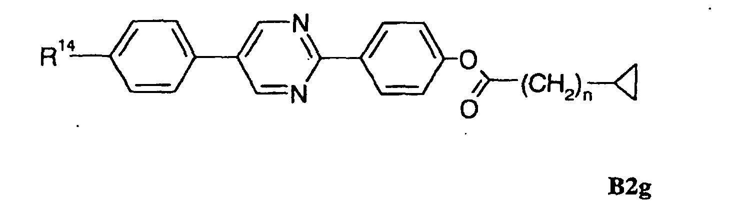 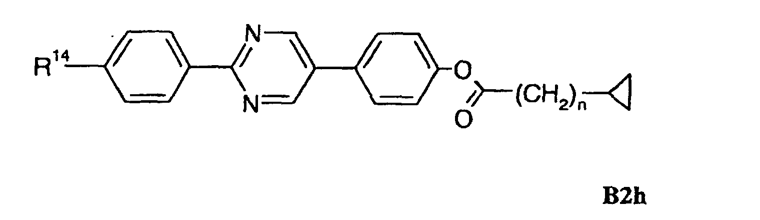 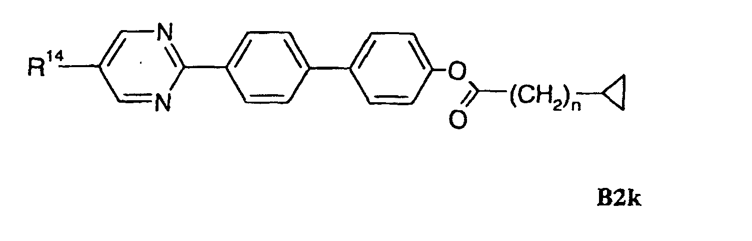 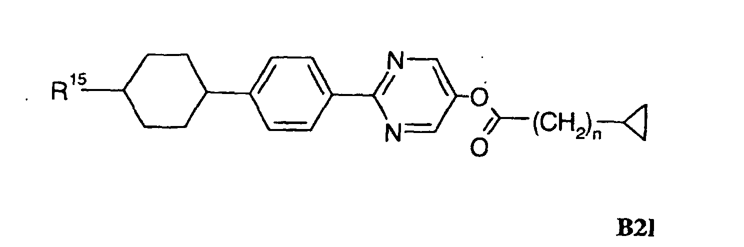 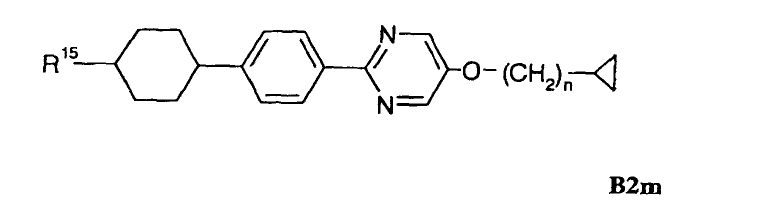 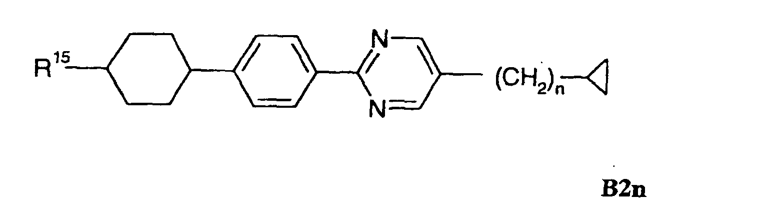 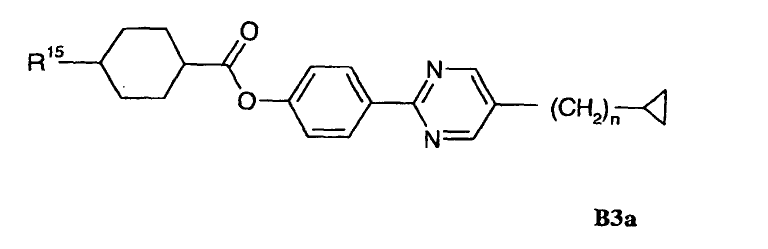 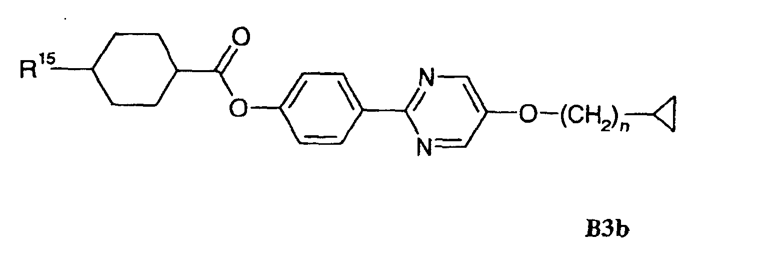 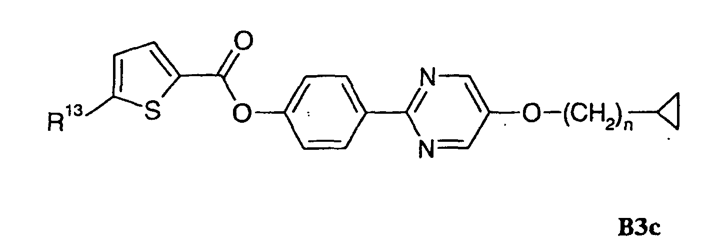 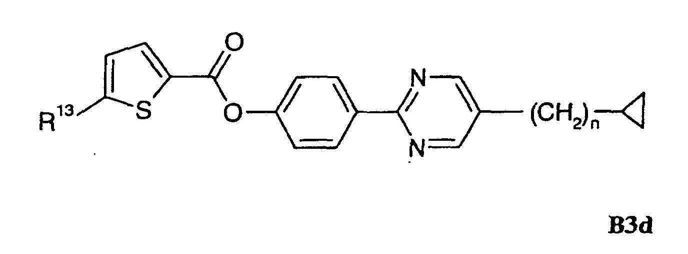 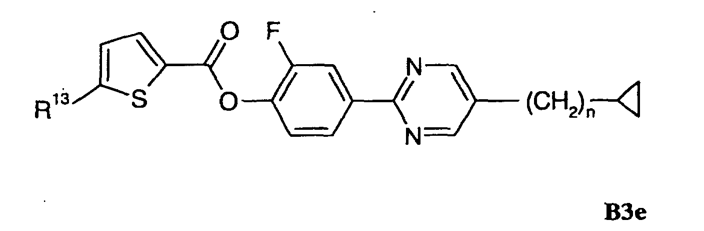 worin bedeuten:
- **n**: Null bis 12
- **R**^{**13**}: eine Alkyl- oder Alkyloxy-Gruppe von 2 bis 16 C-Atomen, worin ein oder mehrere H-Atome durch F ersetzt sein können
- **R**^{**14**}: eine Alkyl- oder Alkyloxy-Gruppe von 2 bis 16 C-Atomen, worin eine -CH₂-Gruppe durch -O- oder -CH=CH- ersetzt sein kann und worin auch ein oder mehrere H-Atome durch F ersetzt sein können
- **R**^{**15**}: eine Alkylgruppe von 2 bis 16 C-Atomen, worin eine -CH₂-Gruppe durch -O- ersetzt sein kann und worin auch ein oder mehrere H-Atome durch F ersetzt sein können,

Verbindungen der Substanzklasse (C) entsprechend der Formel R²⁰-M¹⁸-(M¹⁶-A¹⁶)_{c}-(M¹⁷-A¹⁷)_{d}-M¹⁹-R²¹ (C)
- **R**^{**20**} **, R**^{**21**}: gleich oder verschieden
a) Wasserstoff, Alkyl- oder Alkyloxy- mit 2 - 12 C-Atomen, worin eine oder zwei -CH₂-Gruppen ersetzt sein können durch -CH=CH- oder -OC(=O)- oder
   -(O=)C-O- oder -Si(CH₃)₂- und worin auch ein oder mehrere H-Atome durch F ersetzt sein können oder
b) eine Gruppierung mit mindestens einem asymmetrischen C-Atom, die das Strukturelement
   -C*H(F) oder -C*H(CH₃) oder -Oxiran-2,3-diyl enthält und das entweder Bestandteil einer Alkylgruppe von 3 - 16 C-Atomen ist, worin auch 1 bis 4, vorzugsweise eine oder zwei -CH₂-Gruppen ersetzt sein können durch -O- oder -OC(=O) oder -(O=)C-O- und worin das asymmetrische C-Atom als Substituenten -CH₃, -CF₃, -OCH₃, -CH₃, Cl, CN oder F trägt, oder Bestandteil ist eines 3-7-gliedrigen Carbocyclus (worin auch eine oder zwei nicht benachbarte -CH₂-Gruppen durch -O- oder eine -CH₂-Gruppe durch
   -OC(=O)- oder -(O=)C-O- ersetzt sein können),
   wobei mindestens bei einem von R²⁰ , R²¹ die unter b) definierte Gruppierung mit mindestens einem asymmetrischen C-Atom vorliegt, und M¹⁸ bzw. M¹⁹ eine Einfachbindung ist , falls die Gruppierung mit dem asymmetrischen C-Atom Bestandteil einer Alkylkette ist,
- **A**^{**16**}: Pyrimidin-2,5-diyl,
- **A**^{**17**}: 1,4-Phenylen,
- **M**^{**16**}**, M**^{**17**}: unabhängig voneinander gleich oder verschieden eine Einfachbindung, -OC(=O)- oder -(O=)C-O-, -OCH₂-, -CH₂-O-, -CH₂CH₂-, -CH₂CH₂CH₂CH₂- oder -C C-,
- **M**^{**18**}**, M**^{**19**}: -OC(=O)-, -(O=)C-O-, -OCH₂-, -CH₂-O- oder eine Einfachbindung,
- **c, d:**: Null oder 1, mit dem Vorbehalt 1≤ {c+d} ≤ 2 und dem Verständnis, daß (-A^{x}-M^{x}-) eine Einfachbindung ist, wenn der Index x Null ist.

Die Erfindung betrifft auch eine Flüssigkristallmischung, wie sie vorstehend definiert ist.

Für die Formeln (A), (B) und (C) gilt hier und analog im folgenden das Verständnis, daß die Bezeichnung von bivalenten Resten im "freien Zustand" erfolgte und maßgeblich für die Charakterisierung der Verbindungen ist, obwohl die Bezeichnungen der bivalenten Reste als Teil der gesamten Markush-Formel - worunter sowohl bildlicher als auch spiegelbildlicher Einbau verstanden werden - streng nach IUPAC jedoch anders lauten können. Der Begriff "Reiberichtung" beschreibt die Orientierungsrichtung der Orientierungsschicht der Flüssigristallzelle.

Die vorteilhafte Phasenfolge I-N*-Sc* im Sinne der vorliegenden Erfindung ist auch dann gegegeben, wenn zwischen der N*- und Sc*-Phase ein kleiner Existenzbereich einer S_{A}-Phase besteht, der jedoch über einen Temperaturbereich von 2 K nicht hinausgeht.

Darüber hinaus besitzt die LCD-Zelle einen asymmetrischen Aufbau, was bedeutet, daß Ober- und Unterseite der Zelle sich in mindestens einem Merkmal, abgesehen von der Aktivmatrix selber, unterscheiden. Dies ist insbesondere der Fall bei
- Unsymmetrischen oder unsymmetrisch behandelten Orientierungsschichten
- Weglassen einer der beiden Orientierungsschichten
- Weglassen oder Verändern des Reibeschrittes einer der beiden Orientierungsschichten
- Einbringen einer unsymmetrischen Schichtstruktur, z.B. durch zusätzliche Isolierschichten mit unterschiedlichen Eigenschaften auf Ober- und Unterseite
- Allen Maßnahmen, die letzlich bewirken, daß die Flüssigkristalldomaine einer unsysmmetrischen Umgebung ausgesetzt ist.

Ausdrücklich einbezogen ist die vorteilhafte Verwendung der erfindungsgemäßen Materialien und Mischungen für Aktivmatrix-Displays, antiferroelektrische Displays sowie smektische Displays, wobei unter Display jegliche Art von optischer Anzeige- und Schaltvorrichtung ungeachtet von Größe, Aufbau, Lichtführung, Ansteuerung und Verwendung verstanden werden soll.

Insbesondere wird unter Aktivmatrixdisplay im Sinne der vorliegenden Erfindung auch ein LCD verstanden, bei dem eines der beiden Substrate durch die Rückseite eines IC-Chips (IC = integrated circuit) ersetzt wird, wie beispielsweise bei D.M.Walba, Science 270, 250-251 (1995) oder http://www.displaytech.com beschrieben.

Die Aufgabe wird insbesondere gelöst durch ein chiral-smektisches Aktivmatrix-Display, enthaltend eine Flüssigkristallschicht in Form einer monostabilen Domäne mit einem über einen weiten Temperaturbereich nahezu konstanten Tiltwinkel.

Die Herstellungsverfahren für die Komponenten der Flüssigkristallmischungen der erfindungsgemäßen Aktivmatrixdisplays sind im Prinzip bekannt, ebenso wie die Herstellung von Flüssigkristallmischungen aus den Einzelkomponenten (siehe z.B. DE-A 198 57 352.9).

Es wurde erfindungsgemäß gefunden, daß durch Verwendung der Flüssigkristallmischungen enthaltend mindestens je eine Verbindung der Substanzklassen (A), (B) und (C) Aktivmatrix-Displays zugänglich sind, in denen die ferroelektrische smektische Phase über einen großen Temperaturbereich stabil ist. Zudem ist die Abweichung der monostabilen Position von der Reiberichtung betragsmäßig klein und über einen weiten Temperaturbereich nahezu konstant. Dies führt dazu, daß bei fester Polarisatorstellung im gesamten Temperaturbereich maximaler Kontrast erzielt wird.

Besonders bevorzugt enthält die Flüssigkristallmischung des erfindungsgemäßen Displays in Summe 0,1 bis 15 Gew.-% einer oder mehrerer Verbindungen der Substanzklasse (C); ganz besonders bevorzugt enthält die Mischung in Summe 0,2 bis 12 Gew.-% einer oder mehrerer Verbindungen der Substanzklasse (C). Bevorzugt wird dabei eine Mischung, deren Spontanpolarisation im Bereich der Arbeitstemperatur <20 nC/cm² ist.

Die Erfindung wird durch die nachstehenden Beispiele näher erläutert.

### Beispiele

Eine LCD-Testzelle wird hergestellt aus zwei handelsüblichen, mit Indium-Zinnoxid leitfähig transparent beschichteten Glasplatten. Diese werden mit der Orientierungsschicht LQT-120 (Hersteller: Hitachi Chemicals KK), welche mit N-Methylpyrrolidon auf 8.3% ihres ursprünglichen Feststoffgehaltes verdünnt wurde, durch Spin-coating beschichtet (2500 U/min, 10 sec), durch Erhitzen gehärtet (230°C, 1 Stunde) und anschließend einem Reibeprozeß zwecks Orientierung unterzogen (Reibestoff: Rayon-Typ YA-20-R*, clearance 0.2 mm, 1 mal, 700 U/min Walzendrehzahl, 10 cm/s Substratgeschwindigkeit, 10 cm Rollendurchmesser).
Die geriebenen Gläser werden bei antiparalleler Ausrichtung der Reiberichtung zu Testzellen verklebt und mittels Abstandhalter auf einen Abstand von 1,3 µm eingestellt.
Die FLC-Mischung wird in die Zelle gefüllt und durch Abkühlen zunächst in der nematischen bzw. cholesterischen Phase orientiert. Beim weiteren Abkühlen wird eine Gleichspannung von 3 Volt angelegt und die Zelle mit einer Abkühlrate von 2 K/min in den Bereich der Sc* -Phase (chiral smektisch C) überführt. Dabei bildet sich eine monostabile Monodomäne aus.

Für die nachstehenden Beispiele und Vergleichsbeispiele wird die oben beschriebene Orientierung so durchgeführt, daß die Spannung von 3 Volt im Temperaturbereich von ± 2 K am Phasenübergang N/Sc* angelegt wird.

### Beispiel 1

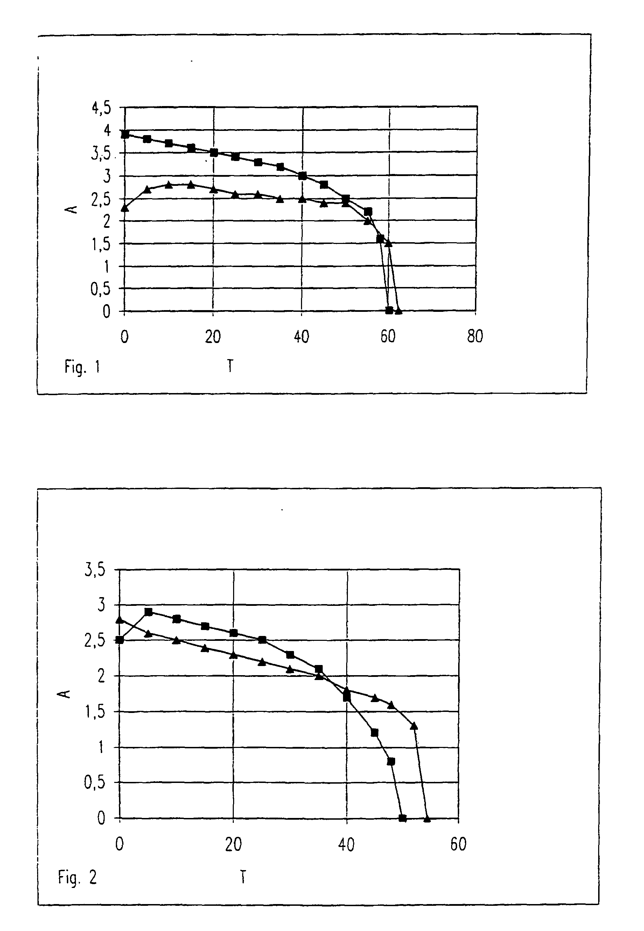

Eine chiral-smektische Flüssigkristallmischung mit den Phasenübergangstemperaturen I / N* 70,0-69,3°C sowie N* / Sc* 51,1°C wird mit 20 Gew.-% der Verbindung 4-(5-Cyclopropyl)pentyloxy-4'-(5-octyl-pyrimidin-2-yl)biphenyl versetzt und die in nachstehender Fig.1 aufgeführten Werte der Abweichung des LC-Direktors von der Reiberichtung gemessen.

In Fig. 1 bedeuten T: Temperatur in °C; A: Abweichung in Grad; Quadrate: Vergleichsbeispiel: Dreiecke: Beispiel 1

### Vergleichsbeispiel 1

Die chiral-smektische Mischung aus Beispiel 1 wird mit 20 Gew.-% der Verbindung 4-Heptyl-4'-(5-octyl-pyrimidin-2-yl)biphenyl versetzt; die resultierende Mischung mit den Phasenübergangstemperaturen I / N* 85,3 - 81,0 °C und N* / Sc* 60,2°C zeigt die in Fig. 1 aufgeführten Meßwerte.
Wie aus Fig.1 ersichtlich, beträgt im Bereich von 10 bis 50°C (also im Arbeitstemperaturbereich) die Änderung der Abweichung der monostabilen Position von der Reiberichtung 0,4 Grad für Beispiel 1, während für das Vergleichsbeispiel 1,2 Grad gemessen werden. In Folge kann erfindungsgemäß ein nahezu temperaturunabhängiger Kontrast erzielt werden.

### Beispiel 2

Eine chiral-smektische Flüssigkristallmischung mit den Phasenübergangstemperaturen I / N* 81,8 - 80,4°C und N*/ Sc* 55,1°C und bestehend aus [Gew.-%]

| | |
|---|---|
| 2-(4-Decyloxyphenyl)-5-hexyl-pyrimidin | 11,5% |
| 5-Decyl-2-(4-octyloxyphenyl)pyrimidin | 11,5% |
| 2-(4-Heptanoyloxy-phenyl)-5-octyl-pyrimidin | 7,7% |
| 2-(4-Octanoyloxy-phenyl)-5-octyl-pyrimidin | 7,7% |
| 5-Nonyl-2-(4-octanoyloxy-phenyl)pyrimidin | 7,7% |
| 5-Butyl-thiophen-2-carbonsäure-[4-(5-undecyl- | |
| pyrimidin-2-yl)phenyl]ester | 30,0% |
| (S)-5-Decyl-2-[4-(2-fluordecyloxy)phenyl]pyrimidin trans-4-Pentylcyclohexancarbonsäure-{4-[5-(9-cyclopropyl-nonyl)- | 4,0% |
| pyrimidin-2-yl]}phenyl-ester | 20,0% |

weist die in Fig.2 aufgeführten Werte der Abweichung des Direktors von der Reiberichtung auf. Quadrate: Vergleichsbeispiel 1; Dreiecke: Beispiel 2.

Auch dieses Beispiel belegt die über einen weiten Temperaturbereich geringe Abweichung des Direktors von der Reiberichtung und somit geringe Änderungen des Kontrastes. So beträgt im Bereich von 10 bis 45°C (also im Arbeitstemperaturbereich ) die Änderung der Abweichung der monostabilen Position von der Reiberichtung 0,8 Grad für Beispiel 2, während für das Vergleichsbeispiel 2 - die Mischung aus Beispiel 2, jedoch mit 20% trans-4-Pentylcyclohexancarbonsäure-[4-(5-undecyl-pyrimidin-2-yl)phenyl]ester anstelle der entsprechenden Cyclopropyl-Verbindung - 1,6 Grad gemessen werden.

## Patentansprüche

1. Aktivmatrixdisplay mit einer asymmetrisch aufgebauten Zelle, die eine monostabile Flüssigkristalldomaine enthält, wobei die chiral-smektische Flüssigkristallmischung die Phasenfolge I-N*-SmC*, eine Spontanpolarisation im Bereich der Arbeitstemperatur von <40 nC/cm², sowie bei mindestens einer Temperatur in der nematischen Phase einen Pitch von >20 µm aufweist und die Abweichung der monostabilen Position von der Reiberichtung im Bereich der Arbeitstemperatur des Displays dem Betrag nach weniger als 10 Grad beträgt, und wobei die Flüssigkristallmischung mindestens je 1 Verbindung der Substanzklassen (A) und (B) und, bezogen auf die Flüssigkristallmischung, 0,05 bis 50 Gew.-% einer oder mehrerer Verbindungen der Substanzklasse (C) enthält.
Verbindungen der Substanzklasse (A) entsprechend den Formeln 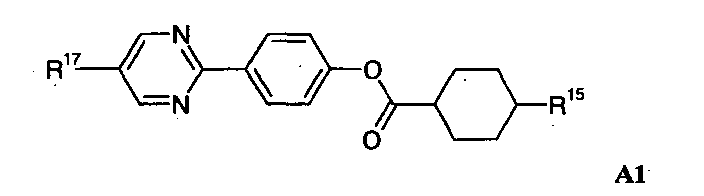 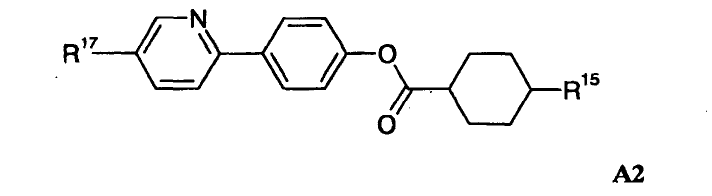 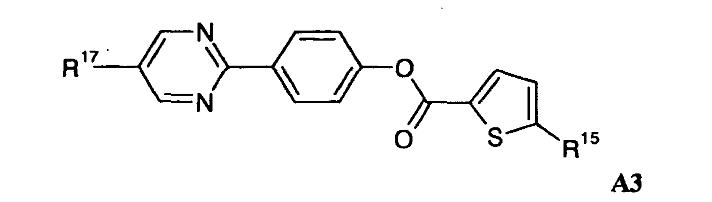 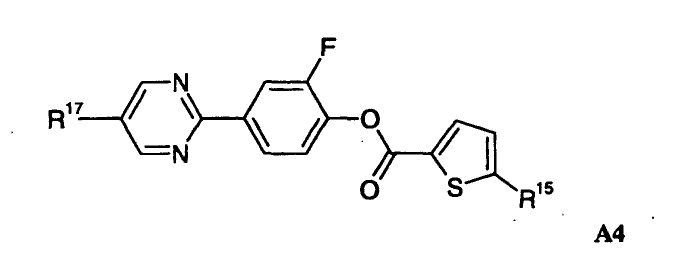 worin bedeuten:
**R**^{**15**} eine Alkyl- oder Alkyloxy-Gruppe von 2 bis 16 C-Atomen, worin eine oder zwei nicht benachbarte -CH₂-Gruppen durch -O- und/oder -CH=CH- ersetzt sein können und worin auch ein oder mehrere H-Atome durch F ersetzt sein können
**R**^{**17**} eine Alkyl- oder Alkyloxy-Gruppe von 2 bis 16 C-Atomen, worin auch die dem Kern nächste -CH₂-Gruppe durch -OC(=O)- oder -C(=O)O- ersetzt sein kann und worin auch eine weitere, nicht benachbarte und nicht terminale -CH₂-Gruppe durch -O- ersetzt sein kann,
Verbindungen der Substanzklasse (B) entsprechend den Formeln 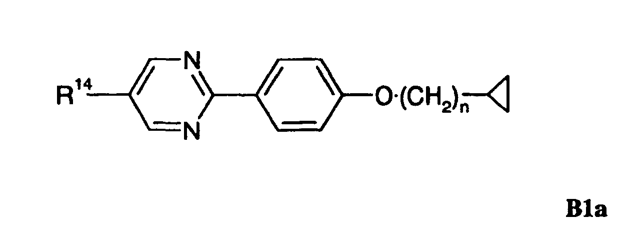 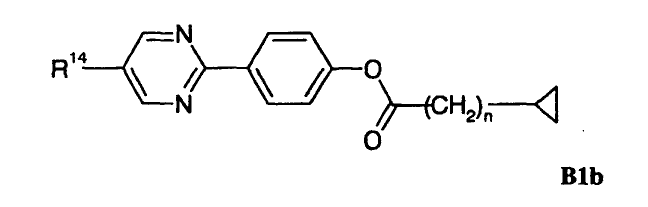 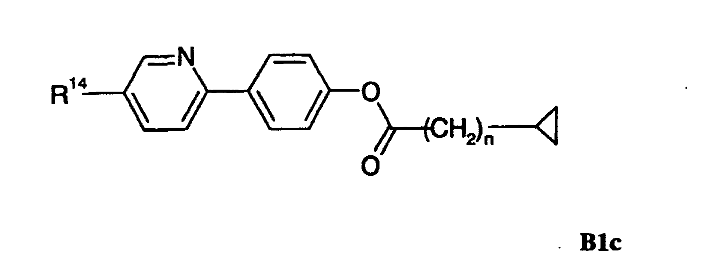 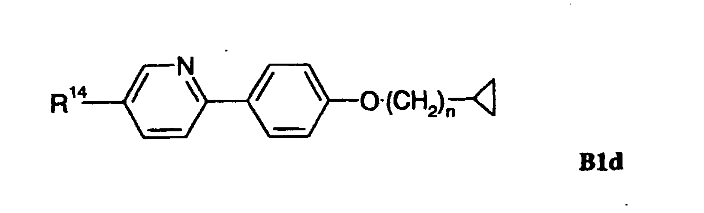 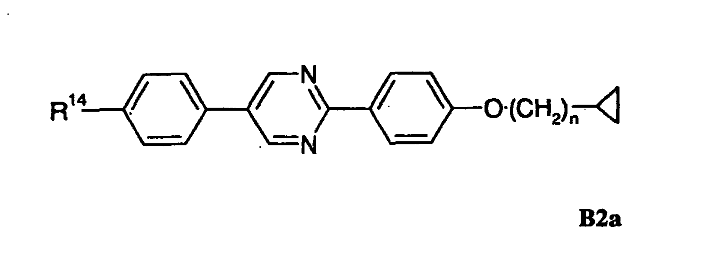 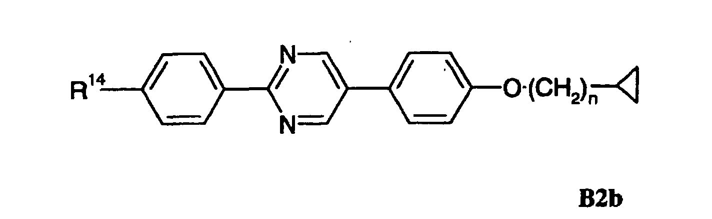 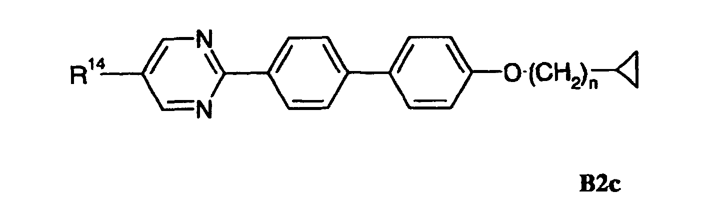 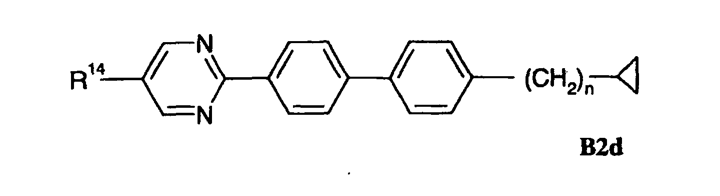 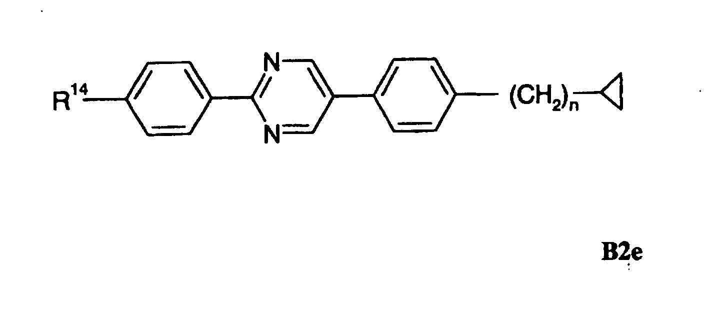 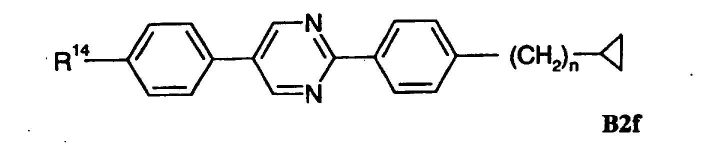 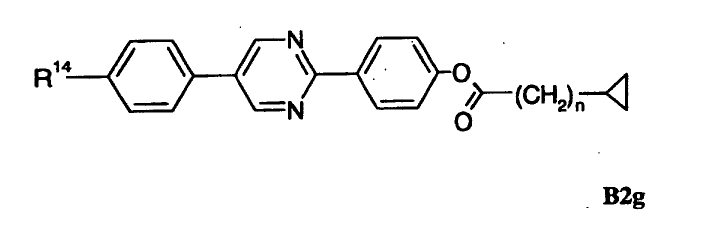 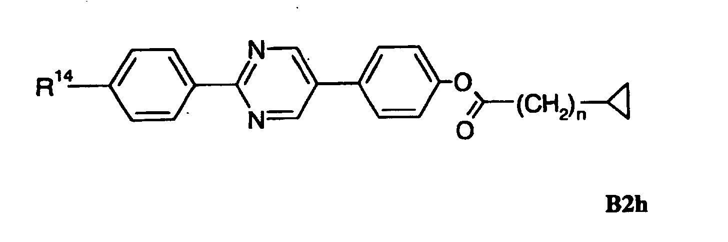 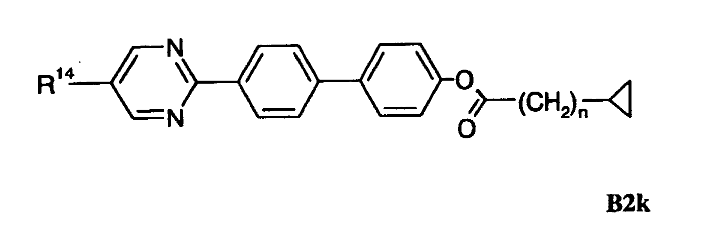 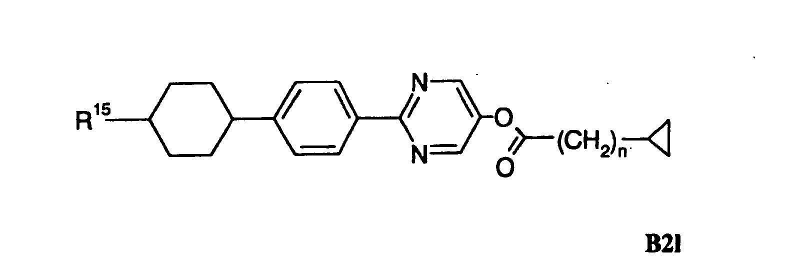 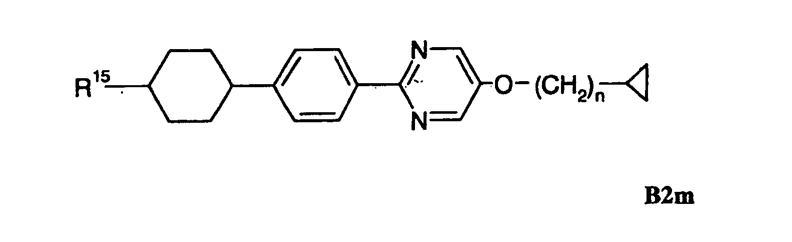 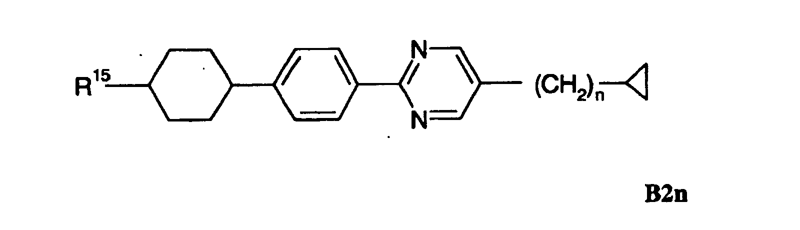 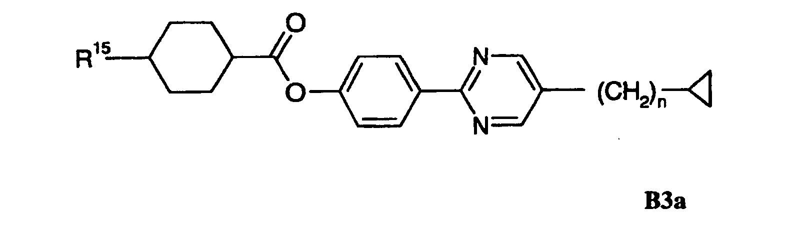 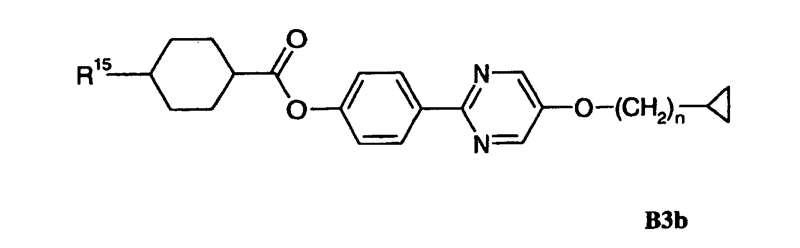 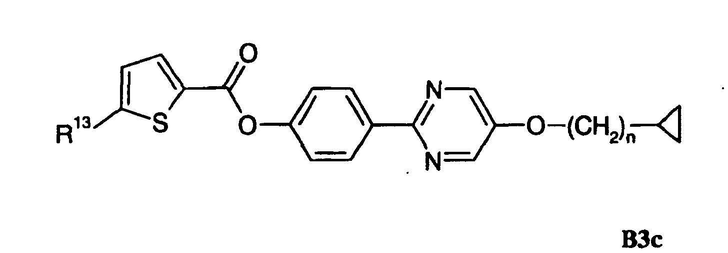 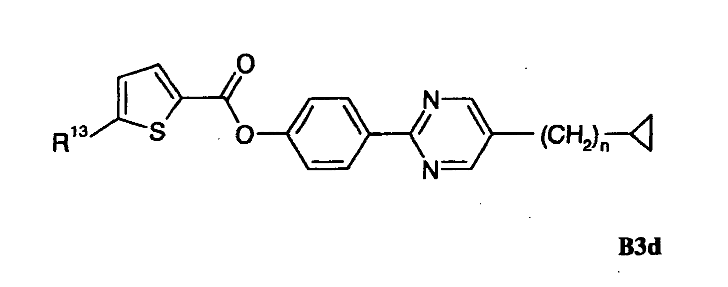 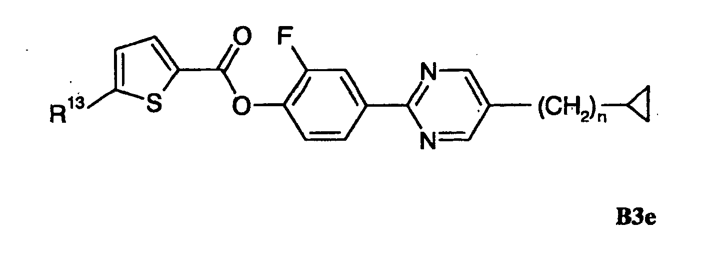 worin bedeuten:
**n** Null bis 12
**R**^{**13**} eine Alkyl- oder Alkyloxy-Gruppe von 2 bis 16 C-Atomen, worin ein oder mehrere H-Atome durch F ersetzt sein können
**R**^{**14**} eine Alkyl- oder Alkyloxy-Gruppe von 2 bis 16 C-Atomen, worin eine -CH₂-Gruppe durch -O- oder -CH=CH- ersetzt sein kann und worin auch ein oder mehrere H-Atome durch F ersetzt sein können
**R**^{**15**} eine Alkylgruppe von 2 bis 16 C-Atomen, worin eine -CH₂-Gruppe durch -O- ersetzt sein kann und worin auch ein oder mehrere H-Atome durch F ersetzt sein können,
Verbindungen der Substanzklasse (C) entsprechend der Formel R²⁰-M¹⁸-(M¹⁶-A¹⁶)_{c}-(M¹⁷-A¹⁷)_{d}-M¹⁹-R²¹ (C)
**R**^{**20**}**, R**^{**21**} gleich oder verschieden
a) Wasserstoff, Alkyl- oder Alkyloxy- mit 2 - 12 C-Atomen, worin eine oder zwei -CH₂-Gruppen ersetzt sein können durch -CH=CH- oder -OC(=O)- oder
-(O=)C-O- oder -Si(CH₃)₂- und worin auch ein oder mehrere H-Atome durch F ersetzt sein können oder
b) eine Gruppierung mit mindestens einem asymmetrischen C-Atom, die das Strukturelement
-C*H(F) oder -C*H(CH₃) oder -Oxiran-2,3-diyl enthält und das entweder Bestandteil einer Alkylgruppe von 3 -16 C-Atomen ist, worin auch 1 bis 4, vorzugsweise eine oder zwei -CH₂-Gruppen ersetzt sein können durch -O- oder -OC(=O) oder -(O=)C-O- und worin das asymmetrische C-Atom als Substituenten -CH₃, -CF₃, -OCH₃, -CH₃, Cl, CN oder F trägt, oder Bestandteil ist eines 3-7-gliedrigen Carbocyclus (worin auch eine oder zwei nicht benachbarte -CH₂-Gruppen durch -O- oder eine -CH₂-Gruppe durch
-OC(=O)- oder -(O=)C-O- ersetzt sein können),
wobei mindestens bei einem von R²⁰ , R²¹ die unter b) definierte Gruppierung mit mindestens einem asymmetrischen C-Atom vorliegt, und M¹⁸ bzw. M¹⁹ eine Einfachbindung ist , falls die Gruppierung mit dem asymmetrischen C-Atom Bestandteil einer Alkylkette ist,
**A**^{**16**} Pyrimidin-2,5-diyl,
**A**^{**17**} 1,4-Phenylen,
**M**^{**16**}**, M**^{**17**} unabhängig voneinander gleich oder verschieden eine Einfachbindung, -OC(=O)- oder -(O=)C-O-, -OCH₂-, -CH₂-O-, -CH₂CH₂-, -CH₂CH₂CH₂CH₂- oder -C C-,
**M**^{**18**}**, M**^{**19**} -OC(=O)-, -(O=)C-O-, -OCH₂-, -CH₂-O- oder eine Einfachbindung,
**c, d:** Null oder 1, mit dem Vorbehalt 1≤ {c+d} ≤ 2 und dem Verständnis, daß (-A^{x}-M^{x}-) eine Einfachbindung ist, wenn der Index x Null ist.

2. Flüssigkristallmischung, wie sie in Anspruch 1 definiert ist.

## Claims

1. Active matrix display having an asymmetrically constructed cell containing a monostable liquid crystal domain, wherein the chiral-smectic liquid crystal mixture has the phase sequence I-N*-SmC*, a spontaneous polarization in the working temperature range of < 40 nC/cm², and at at least one temperature in the nematic phase a pitch of > 20 µm, and wherein the difference of the monostable position from the rubbing direction in the working temperature range of the display amounts to less than 10 degrees, and wherein the liquid crystal mixture contains at least one compound of the substance classes (A) and (B), and, based on the liquid crystal mixture, 0,05 to 50 % by weight of one or more compounds of the substance class (C),
compounds of the substance class (A) corresponding to formulae 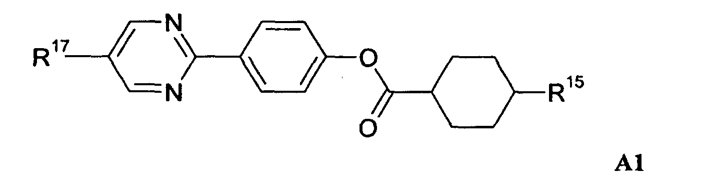 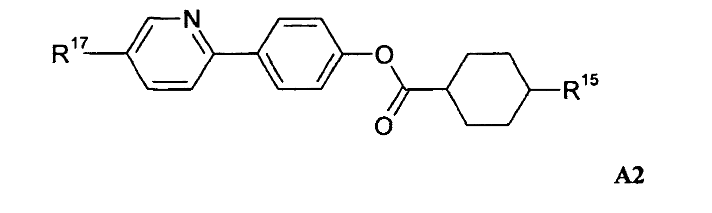 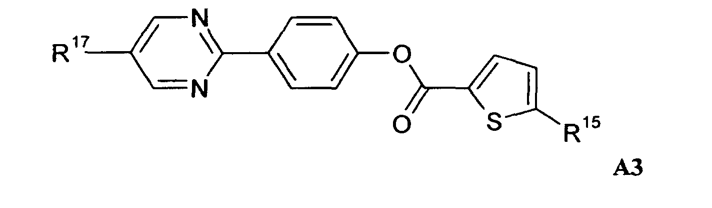 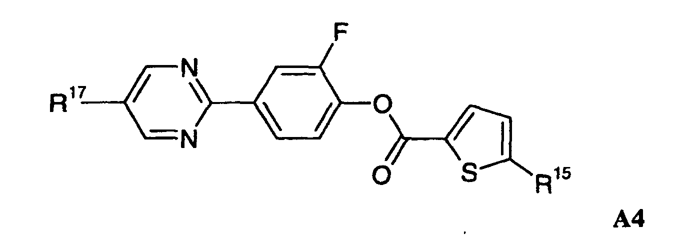 wherein:
**R**^{**15**} is alkyl or alkoxy having 2 to 16 C-atoms, wherein one or two non-neighboring -CH₂-groups can be replaced by -O- and/or -CH=CH- and wherein one or more H may be replaced by I
**R**^{**17**} is alkyl or alkoxy having 2 to 16 C-atoms, wherein the CH₂-group closest to the core can be replaced by -OC(=O)- or -C(=O)O- and wherein a further, non-neighboring and non-terminal CH₂-group can be replaced by -O-,
compounds of substance class (B) corresponding to formulae 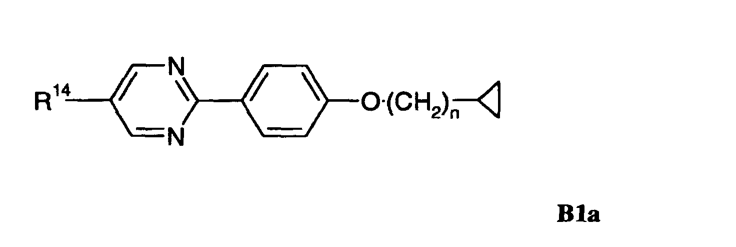 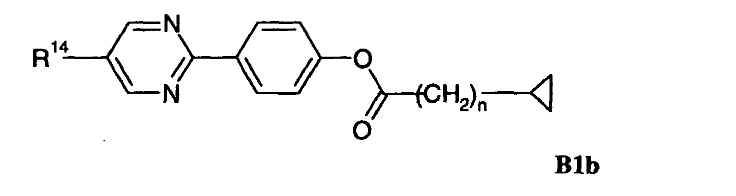 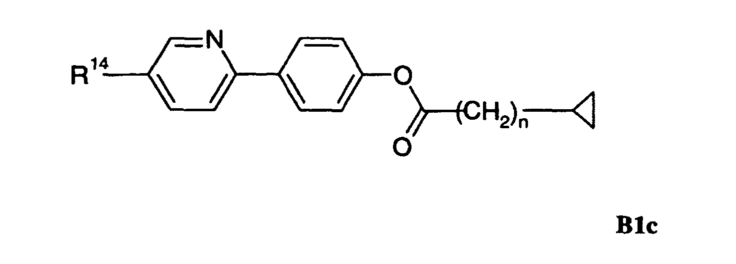 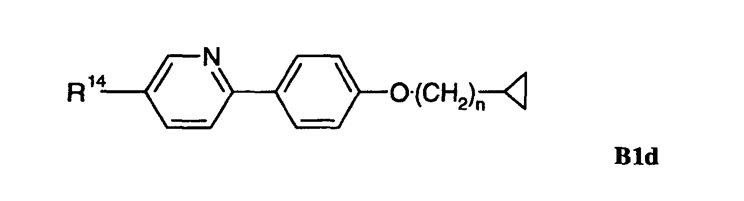 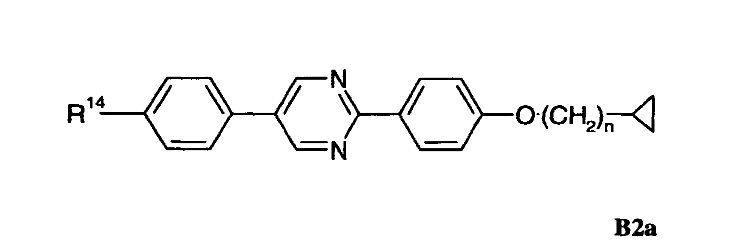 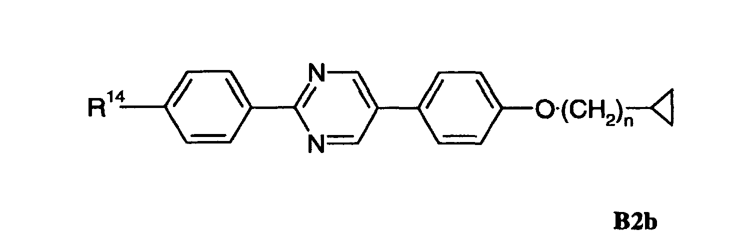 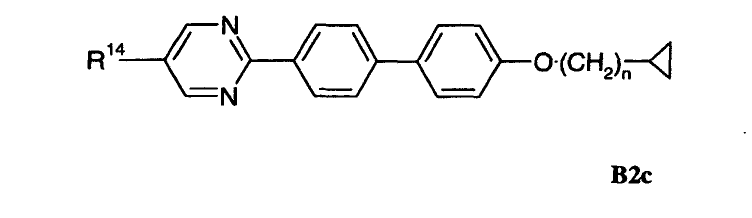 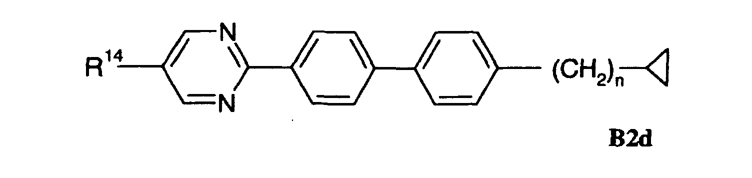 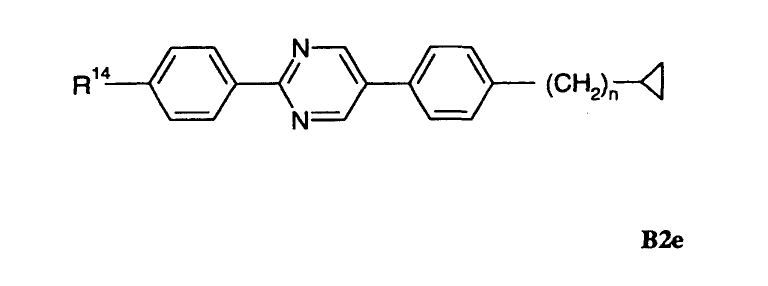 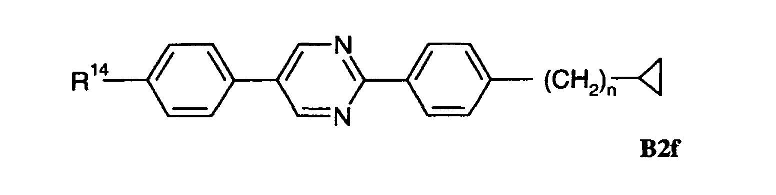 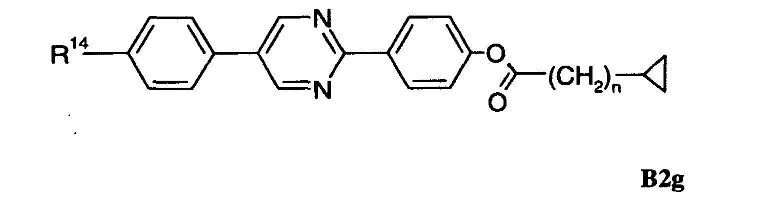 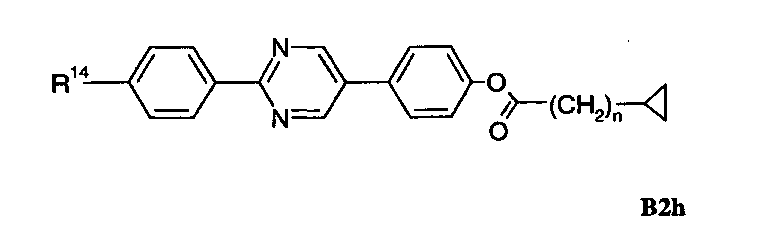 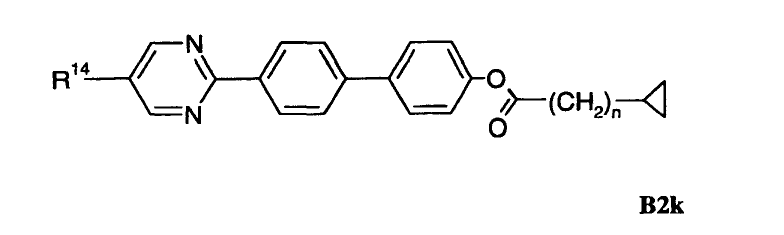 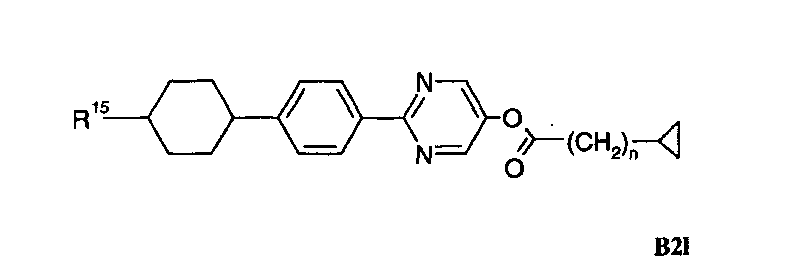 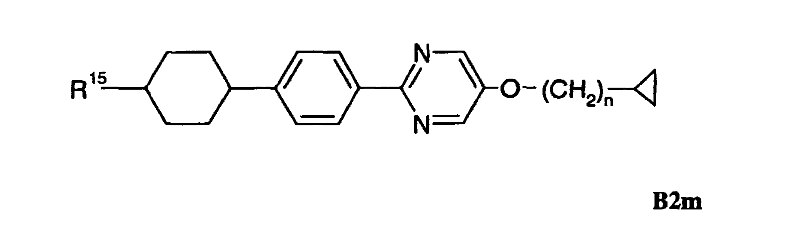 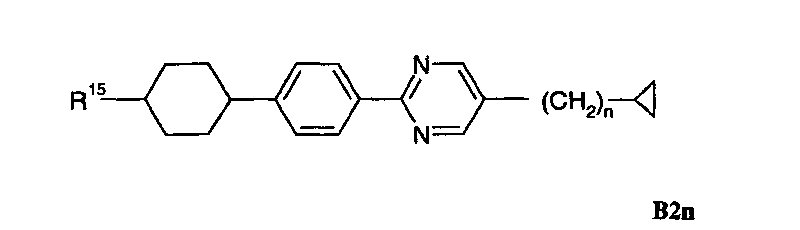 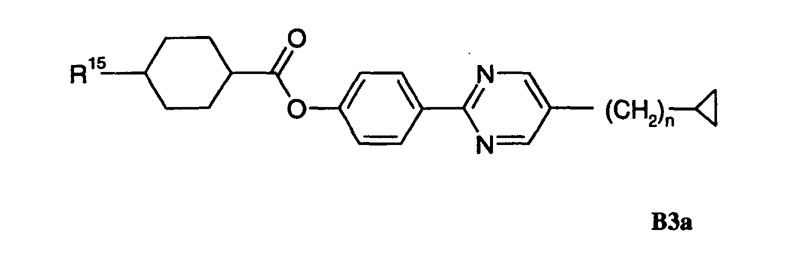 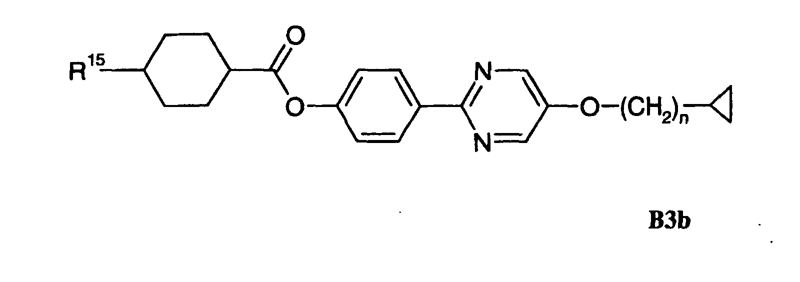 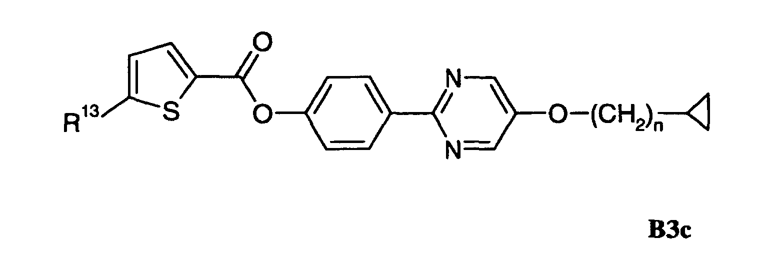 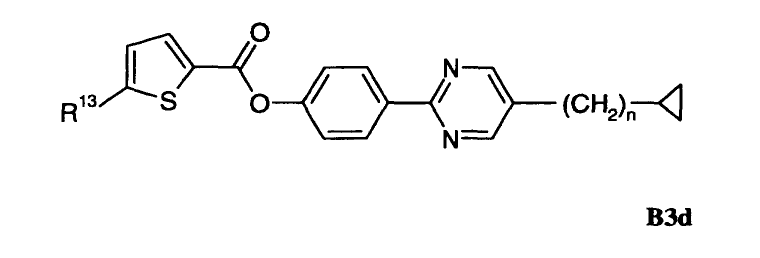 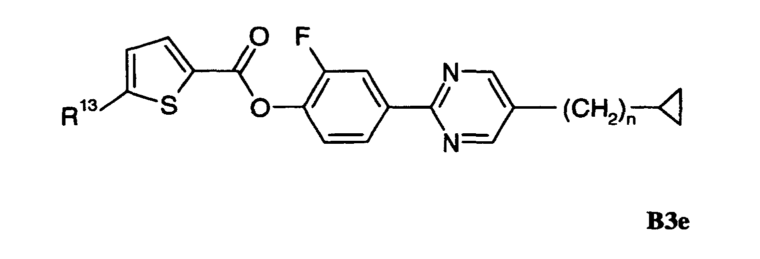 wherein :
**n** is zero to 12
**R**^{**13**} is alkyl or alkoxy having 2 to 16 C-atoms, wherein one or more H can be replaced by F
**R**^{**14**} is alkyl or alkoxy having 2 to 16 C-atoms, wherein one -CH₂-group can be replaced by -O- or -CH=CH- and wherein one or more H can be replaced by F
**R**^{**15**} is alkyl having 2 to 16 C-atoms, wherein one -CH₂-group can be replaced by O- and wherein one or more H can be replaced by F,
compounds of substance class (C) corresponding to formulae
R²⁰-M¹⁸-(M¹⁶-A¹⁶)_{c}-(M¹⁷-A¹⁷)_{d}-M¹⁹-R²¹ (C)
**R**^{**20**}**, R**^{**21**} the same or different are
a) H, alkyl or alkoxy having 2 to 12 C-atoms, wherein one or two -CH₂-groups can be replaced by -CH=CH- or -OC(=O)- or
-(O=)C-O- or -Si(CH₃)₂- and wherein one or two H can be replaced by F or
b) a group having at least one asymmetric C-atom containing the structural element
-C*H(F) or -C*H(CH₃) or -Oxiran-2,3-diyl and being part of an alkyl having 3 - 16 C-atoms, wherein 1 to 4, preferably 1 or 2 -CH₂-groups can be replaced by -O- or -OC(=O) or -(O=)C-O- and wherein the asymmetric C-atom has -CH₃, -CF₃, -OCH₃, -CH₃, Cl, CN or F as substituents, or being part of a 3 - 7 membered carboncyclus (wherein one or two non-neighboring -CH₂-groups can be replaced by O- or one -CH₂-group can be replaced by
-OC(=O)- or -(O=)C-O-,
wherein at least in one of R²⁰ , R²¹ the group defined in b) having at least one asymmetric C-atom is present, and M¹⁸ or M¹⁹ is a single bond, if the group having the asymmetric C-atom in part of an alkyl chain,
**A**^{**16**} pyrimidin-2,5-diyl,
**A**^{**17**} 1,4-phenylene,
**M**^{**16**}**, M**^{**17**} independently the same or different a single bond -OC(=O)- or -(O=)C-O-, -OCH₂-,
-CH₂-O-, -CH₂CH₂-, -CH₂CH₂CH₂CH₂- or -C C-,
**M**^{**18**}**, M**^{**19**} -OC(=O)-, -(O=)C-O-, -OCH₂-, -CH₂-O- or a single bond,
**c, d:** 0 or 1, with the proviso 1≤ {c+d} ≤ 2 and the understanding that (-A^{x}-M^{x}-) is a single bond when x is zero.

2. Liquid crystal mixture as defined in claim 1.

## Revendications

1. Affichage à matrice active avec une cellule montée de manière asymétrique, qui contient un domaine de cristaux liquides monostable, le mélange de cristaux liquides chiral-smectique présentant l'ordre de séquence des phases I-N*-SmC*, une polarisation spontanée dans le domaine de la température de service < 40 nC/cm², ainsi qu'une distance > 20 µm à au moins une température dans la phase nématique et l'écart de la position monostable de la direction de friction dans le domaine de la température de service de l'affichage s'élève à la.valeur inférieure à 10 degrés, et le mélange de cristaux liquides contient au moins toujours 1 composé des classes de substances (A) et (B) et, en ce qui concerne le mélange de cristaux liquides, de 0,05 à 50 % en poids d'un ou de plusieurs composés de la classe des substances (C),
Composés de la classe des substances (A) selon les formules : 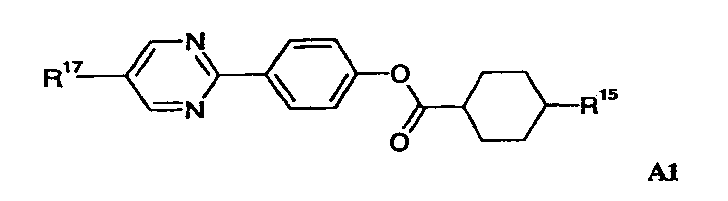 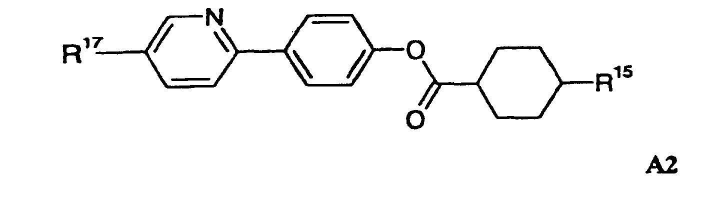 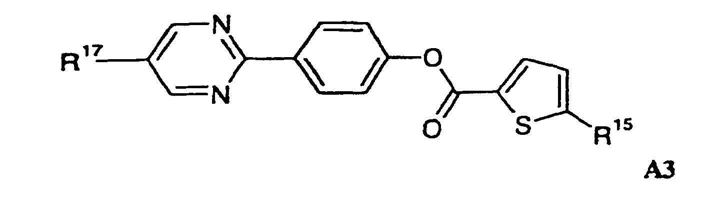 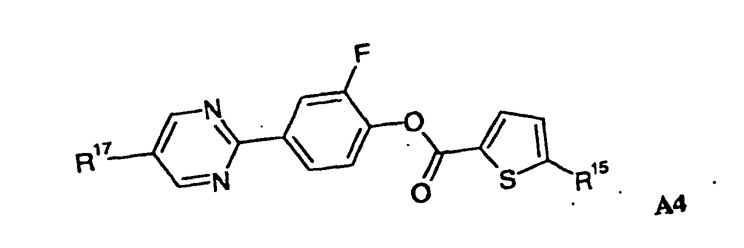 dans lesquelles :
R¹⁵ désigne un groupe alkyle ou alkyloxy ayant de 2 à 16 atomes de carbone, où un ou deux groupes -CH₂- non voisins peuvent être remplacés par -O- et/ou -CH=CH- et où également un ou plusieurs atomes d'hydrogène peuvent être remplacés par F
R¹⁷ désigne un groupe alkyle ou alkyloxy ayant de 2 à 16 atomes de carbone, où également le groupe -CH₂- suivant le noyau peut être remplacé par -OC(=O)- ou -C(=O)O- et où également un autre groupe -CH₂- non voisin et non terminal peut être remplacé par -O-,
Composés de la classe des substances (B) selon les formules : 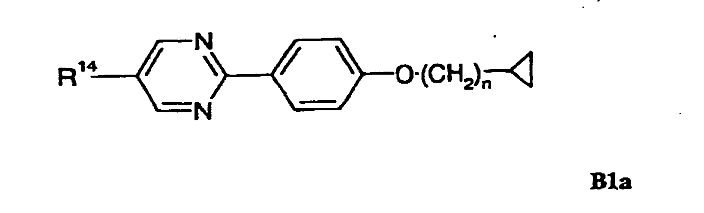 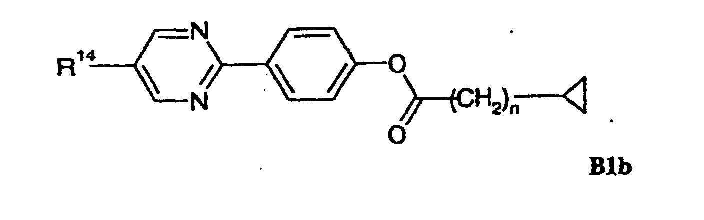 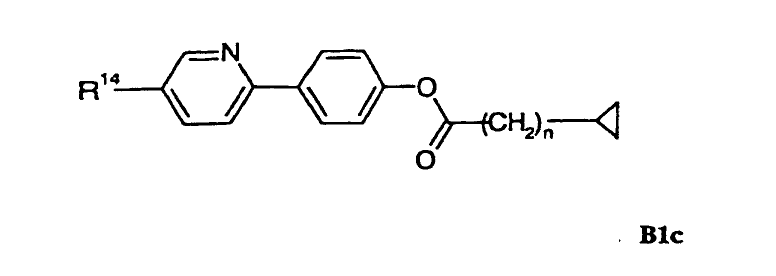 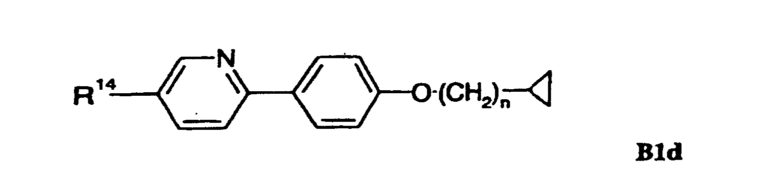 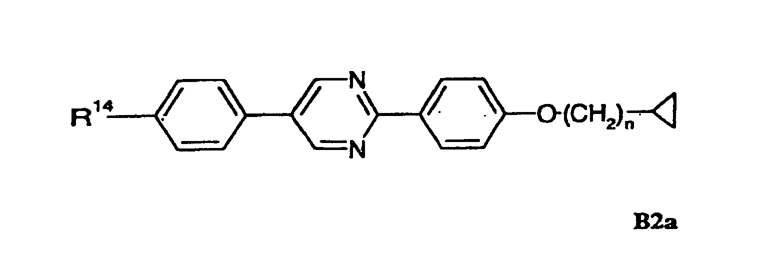 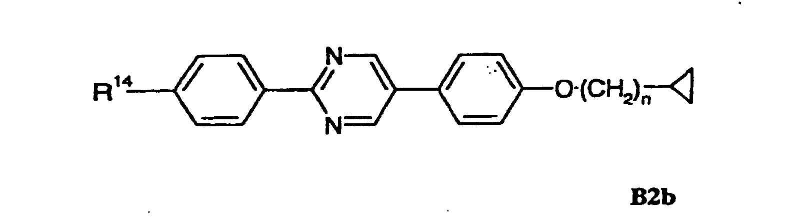 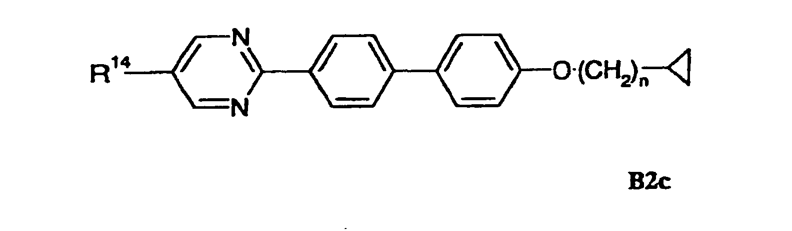 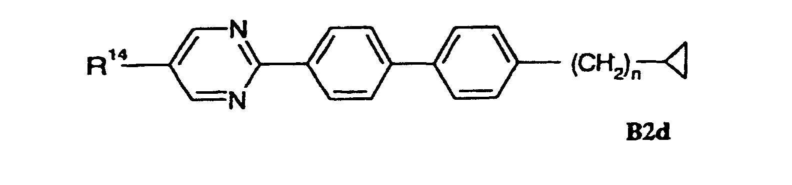 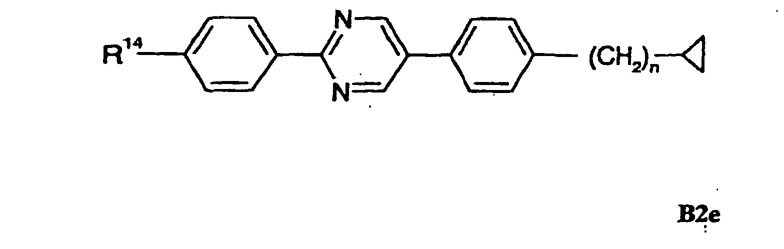 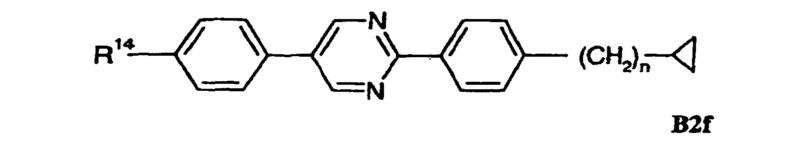 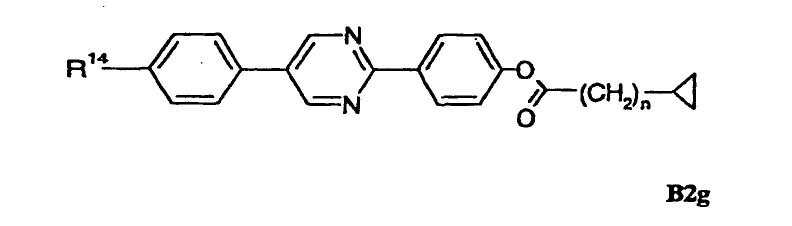 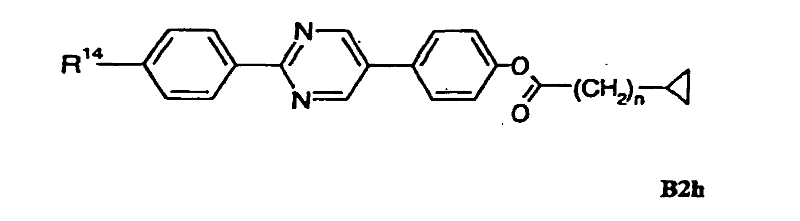 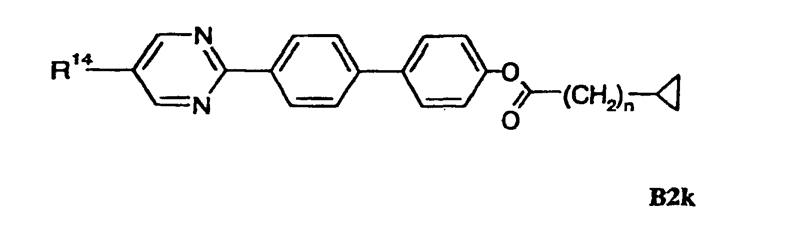 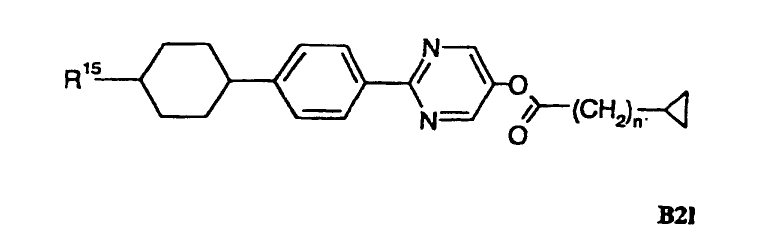 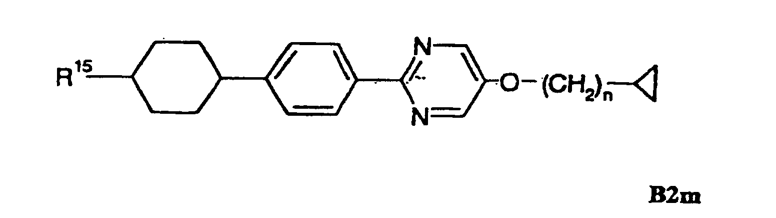 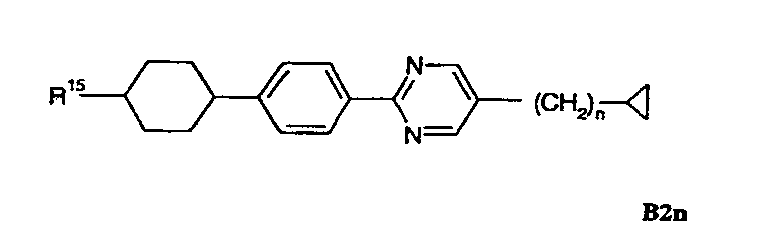 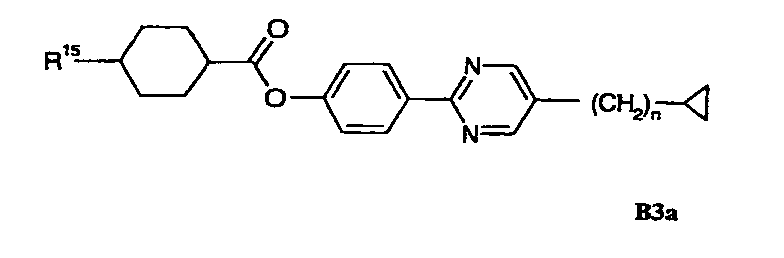 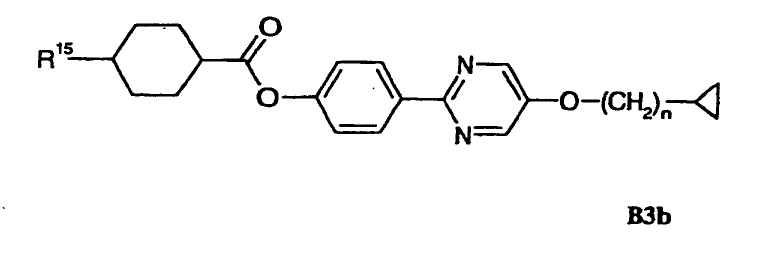 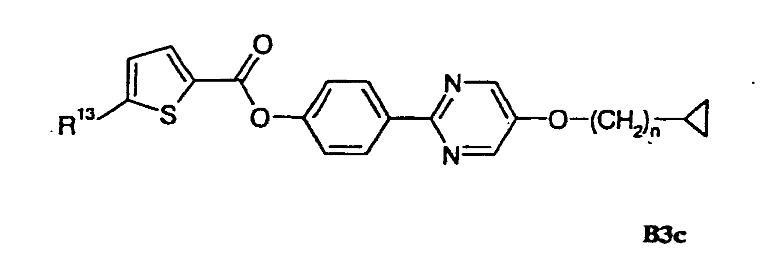 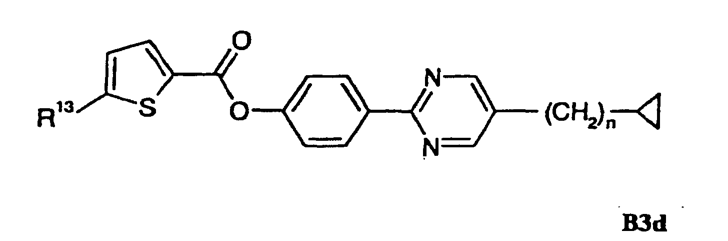 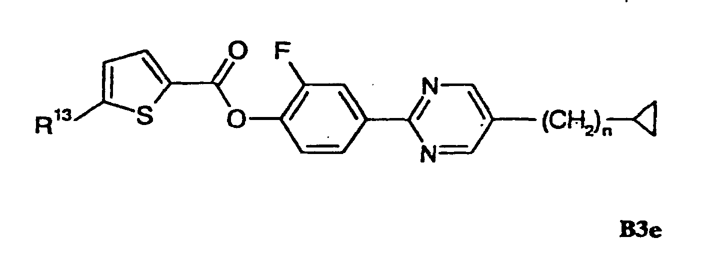 dans lesquelles :
n vaut zéro à 12
R¹³ désigne un groupe alkyle ou alkyloxy ayant de 2 à 16 atomes de carbone, où un ou plusieurs atomes d'hydrogène peuvent être remplacés par F
R¹⁴ désigne un groupe alkyle ou alkyloxy ayant de 2 à 16 atomes de carbone, où un groupe -CH₂- peut être remplacé par -O- ou -CH=CH- et où également un ou plusieurs atomes d'hydrogène peuvent être remplacés par F
R¹⁵ désigne un groupe alkyle ayant de 2 à 16 atomes de carbone, où un groupe -CH₂- peut être remplacé par -O- et où également un ou plusieurs atomes d'hydrogène peuvent être remplacés par F,
Composés de la classe des substances (C) selon la formule :
R²⁰-M¹⁸-(M¹⁶-A¹⁶)_{c}-(M¹⁷-A¹⁷)_{d}-M¹⁹-R²¹ (C)
R²⁰, R²¹, identiques ou différents, désignent
a) l'hydrogène, un groupe alkyle ou alkyloxy ayant de 2 à 12 atomes de carbone, où un ou deux groupes -CH₂-peuvent être remplacés par -CH=CH- ou -OC(=O)- ou -(O=)C-O- ou -Si(CH₃)₂- et où également un ou plusieurs atomes d'hydrogène peuvent être remplacés par F ou
b) un groupement avec au moins un atome de carbone asymétrique, qui contient l'élément structural -C*H(F) ou -C*H(CH₃) ou -oxyran-2,3-diyle et qui est soit un composant d'un groupe alkyle ayant de 3 à 16 atomes de carbone, où également 1 à 4, de préférence un ou deux groupes -CH₂- peuvent être remplacés par -O- ou -OC(=O) ou -(O=)C-O- et où l'atome de carbone asymétrique porte en tant que substituants -CH₃, -CF₃, -OCH₃, -CH₃, Cl, CN ou F, soit qui est un composant d'un carbocycle ayant de 3 à 7 chaînons (où également un ou deux groupes -CH₂- non voisins peuvent être remplacés par -O- ou un groupe -CH₂-peut être remplacé par -OC(=O)- ou -(O=)C-O-),
au moins dans l'un des radicaux R²⁰, R²¹, le groupement défini en b) présentant au moins un atome de carbone asymétrique, et M¹⁸ ou M¹⁹ est une liaison simple, dans le cas où le groupement avec l'atome de carbone asymétrique est un composant d'une chaîne alkyle,
A¹⁶ désigne le pyrimidin-2,5-diyle,
A¹⁷ désigne le 1,4-phénylène,
M¹⁶, M¹⁷, indépendamment l'un de l'autre, identiques ou différents, désignent une liaison simple -OC(=O)- ou -(O=)C-O-, -OCH₂-, -CH₂-O-, -CH₂CH₂-, -CH₂CH₂CH₂CH₂- ou -C-C-,
M¹⁸, M¹⁹ désignent -OC(=O)-, -(O=)C-O-, -OCH₂-, -CH₂-O- ou une liaison simple,
c, d valent zéro ou 1, sous réserve que 1 ≤ {c+d} ≤ 2 et en comprenant que (-A*-M*-) est une liaison simple, si l'indice x est zéro.

2. Mélange de cristaux liquides, tel qu'il est défini dans la revendication 1.
